# EUROPÄISCHE PATENTSCHRIFT

(11) **EP 3 626 139 B1**
(45) Veröffentlichungstag und Bekanntmachung des Hinweises auf die Patenterteilung: **21.07.2021**
(21) Anmeldenummer: 19193087.4
(22) Anmeldetag: 22.08.2019
(51) Int. Cl.: A47J 31/46, A47J 31/52

(54) **GETRÄNKEMASCHINENVORRICHTUNG**
BEVERAGE MACHINES DEVICE
DISPOSITIF DE MACHINE À BOISSONS

(30) Priorität: 21.09.2018 DE 102018123263
(43) Veröffentlichungstag der Anmeldung: 25.03.2020
(73) Patentinhaber: Sysko AG, 7000 Chur (CH)
(72) Erfinder: Wißkirchen, Michael, 88410 Bad Wurzach (DE); Partzsch, Fred, 88099 Neukirch (DE); Wißkirchen, Florian, 88250 Weingarten (DE); Helbling, Norbert, 8645 Jona (CH)
(74) Vertreter: Daub, Thomas

(56) Entgegenhaltungen:
- EP-A1- 2 570 056
- WO-A1-2006/033049
- WO-A1-2012/070002
- WO-A1-2014/177925
- DE-A1-102011 084 424
- DE-A1-102015 119 567

## Beschreibung

### Stand der Technik

Die Erfindung betrifft eine Getränkemaschinenvorrichtung, insbesondere eine Kaffeemaschinenvorrichtung.

Es ist bereits eine Getränkemaschinenvorrichtung, insbesondere eine Kaffeemaschinenvorrichtung, mit zumindest einer Getränkepumpe, vorzugsweise einer Schwingankerpumpe, welche zur Förderung einer Getränkeflüssigkeit vorgesehen ist, mit zumindest einer Regeleinheit, welche dazu vorgesehen ist, zumindest eine Strömungskenngröße der Getränkeflüssigkeit einzuregeln, und mit zumindest einer Zubereitungseinheit, welche zumindest eine Brüheinheit umfasst, bekannt.

Aus der WO 2014/177925 A1 ist eine Getränkemaschinenvorrichtung bekannt, welche eine hydraulische Pumpe zur Regulierung eines Wasserstroms, einen hydraulischen Kreislauf, durch welchen die Pumpe mit einer Liefereinheit, welche eine Filtereinheit mit Kaffeepulver aufweist, verbunden ist, wobei zwischen der Pumpe und der Liefereinheit ein Volumenmesser angeordnet ist, welcher eine Menge an Wasser, die zur Herstellung einer vordefinierten Menge an Getränk notwendig ist, reguliert, und mit einem Ventil zur Anpassung einer Wasserströmungsrate und mit einem Boiler zur Anpassung einer Wassertemperatur, wobei das Ventil als ein motorbetriebenes Ventil ausgebildet ist und einen linearen Schrittmotor aufweist.

Die Aufgabe der Erfindung besteht insbesondere darin, eine gattungsgemäße Getränkemaschinenvorrichtung mit verbesserten Eigenschaften hinsichtlich eines Komforts und einer Variabilität bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Getränkemaschinenvorrichtung, insbesondere Kaffeemaschinenvorrichtung, mit zumindest einer Getränkepumpe, vorzugsweise einer Schwingankerpumpe, welche zur Förderung einer Getränkeflüssigkeit vorgesehen ist, mit zumindest einer Regeleinheit, welche dazu vorgesehen ist, zumindest eine Strömungskenngröße der Getränkeflüssigkeit einzuregeln, und mit zumindest einer Zubereitungseinheit, welche zumindest eine Brüheinheit umfasst.

Es wird vorgeschlagen, dass die zumindest eine Regeleinheit fluidtechnisch vor der Brüheinheit angeordnet ist. Insbesondere ist die zumindest eine Regeleinheit entlang einer Hauptströmungsrichtung der Getränkeflüssigkeit vor der Brüheinheit angeordnet. Vorzugweise ist die zumindest eine Regeleinheit von einer im Wesentlichen mechanischen Regeleinheit gebildet. Bevorzugt ist die Regeleinheit dazu vorgesehen, zumindest eine Strömungskenngröße der Getränkeflüssigkeit zumindest im Wesentlichen auf zumindest einen vorbestimmten Wert einzuregeln. Insbesondere ist die Regeleinheit dazu vorgesehen, die Strömungskenngröße wenigstens bereichsweise auf einen zumindest im Wesentlichen konstanten Wert einzuregeln.

Hierdurch kann vorteilhaft eine Betreibbarkeit, insbesondere im Hinblick auf eine Flexibilität und/oder eine Effizienz, verbessert werden. Es kann vorteilhaft eine Flexibilität weiter verbessert werden, da ein variabler Wert der weiteren Strömungskenngröße aus einer Bandbreite von Werten innerhalb eines Wertebereichs, in welchem der Wert der Strömungskenngröße auf einen zumindest im Wesentlichen konstanten Wert geregelt ist, ausgewählt werden kann. Es kann insbesondere die Regelung verschiedener Volumenstrom-Druck-Kurven erreicht werden. Ferner kann dadurch insbesondere Lautstärke, insbesondere eine von außerhalb der Getränkemaschine hörbare Lautstärke, insbesondere der Getränkepumpe, gering gehalten werden. Mittels der Regeleinheit kann insbesondere eine Geräuschentwicklung eines Kolbens der Pumpe gering gehalten werden.

Unter einer "Getränkemaschinenvorrichtung" soll insbesondere ein Teil einer Getränkemaschine verstanden werden, welcher diese zumindest teilweise und vorzugsweise zumindest zu einem Großteil ausbildet. Alternativ kann die Getränkemaschinenvorrichtung die Getränkemaschine vollständig ausbilden. Unter dem Ausdruck "zumindest zu einem Großteil" sollen dabei insbesondere zumindest zu 55 %, vorzugsweise zumindest zu 65 %, bevorzugt zumindest zu 75 %, besonders bevorzugt zumindest zu 85 % und ganz besonders bevorzugt zumindest zu 95 % verstanden werden. Die Getränkemaschine ist insbesondere zum Bereiten von Getränken vorgesehen, wie vorzugsweise von Warm- und/oder Heißgetränken, wie beispielsweise Kaffee, Tee, Kakao, Brühe, Suppe oder dergleichen. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Alternativ oder zusätzlich könnte die Getränkemaschine zu einem Bereiten von Kaltgetränken, wie beispielsweise Saft, Softdrinks oder dergleichen, vorgesehen sein. Auch könnte dieselbe Getränkemaschine zum Bereiten von verschiedenen Getränkearten vorgesehen sein, wie beispielsweise von Heiß- und Kaltgetränken. Unter dem Begriff "Bereiten" soll insbesondere Herstellen, Erzeugen, Zubereiten, und zwar vorzugsweise durch Brühen, Anmischen, Anrichten und/oder Servieren, verstanden werden. Die Getränkemaschine könnte insbesondere zum Bereiten von Getränken mit Hilfe von vorgefertigten Zubereitungsportionen, welche beispielsweise in Form von Kapseln und/oder Pads vorliegen, vorgesehen sein. Bevorzugt ist die Getränkemaschine als ein Getränkeautomat, insbesondere ein Kaffeeautomat, und besonders bevorzugt als ein Getränkevollautomat, insbesondere ein Kaffeevollautomat ausgebildet. Ganz besonders bevorzugt ist die Getränkemaschine zum Bereiten von verschiedenen Getränkevarianten vorgesehen. Unter einer "Getränkevariante" soll insbesondere eine bevorzugte Zubereitungsart eines Getränks verstanden werden, wie beispielsweise von Kaffee, Filterkaffee, Espresso, Mokka, Cappuccino, Latte Macchiato oder dergleichen. Unter einer "Getränkeflüssigkeit" soll insbesondere eine trinkbare Flüssigkeit verstanden werden, welche zum Bereiten eines Getränks vorgesehen ist und dann selbst Bestandteil des bereiteten Getränks ist, wie beispielsweise Wasser.

Die Getränkepumpe ist insbesondere zumindest teilweise, vorzugsweise zumindest zu einem Großteil und besonders bevorzugt vollständig lebensmittelecht ausgebildet. Vorzugsweise sind zumindest Bauteile der Getränkepumpe, wie beispielsweise eine Kompressionskammer, ein Pumpkolben oder dergleichen, welche mit der Getränkeflüssigkeit in Kontakt kommen, lebensmittelecht ausgebildet. Zur Förderung der Getränkeflüssigkeit könnte die Getränkemaschinenvorrichtung zumindest zwei, vorzugsweise zumindest drei und besonders bevorzugt mehrere Getränkepumpen aufweisen, welche insbesondere variabel zueinander in Reihe und/oder parallel schaltbar und derart ansteuerbar sein könnten. Unter "zumindest im Wesentlichen" soll insbesondere eine Berücksichtigung einer Abweichung von höchstens 20 %, vorzugsweise höchstens 15 %, bevorzugt höchstens 10 % und ganz besonders bevorzugt von höchstens 5 % von einem angegebenen Wert verstanden werden. Bevorzugt weist die Getränkemaschinevorrichtung jedoch nur eine, insbesondere eine einzige, Getränkepumpe auf. Die Getränkepumpe weist insbesondere zumindest eine Pumpenkennlinie auf. Unter einer "Pumpenkennlinie" soll insbesondere eine Kennlinie der Getränkepumpe verstanden werden, welche einen Zusammenhang zwischen einem von der Getränkepumpe erzeugten Wert einer Getränkekenngröße und dem sich daraufhin an der Getränkepumpe einstellenden Wert der Strömungskenngröße beschreibt. Die Pumpenkennlinie gibt insbesondere ein Maß für eine Leistungsfähigkeit der Getränkepumpe an.

Die Getränkemaschinenvorrichtung weist insbesondere ein Leitungssystem auf. Unter einem "Leitungssystem" soll insbesondere ein System verstanden werden, welches zumindest ein die Getränkeflüssigkeit leitendes Bauteil umfasst. Vorzugsweise umfasst das Leitungssystem alle die Getränkeflüssigkeit leitenden Bauteile der Getränkemaschinenvorrichtung. Unter einem "leitenden Bauteil" soll insbesondere ein Bauteil verstanden werden, welches die Getränkeflüssigkeit passiv leitet, ohne diese aktiv zu fördern, wie dies im Gegensatz beispielsweise eine Getränkepumpe tut. Das Leitungssystem ist insbesondere frei von einer Getränkepumpe. Das Leitungssystem bildet insbesondere eine Last, mit welcher die Getränkepumpe in einem Betrieb beaufschlagt ist. Das Leitungssystem weist insbesondere zumindest eine Lastkennlinie auf. Unter einer "Lastkennlinie" soll insbesondere eine Kennlinie verstanden werden, welche einen Zusammenhang zwischen einem erzeugten Wert einer Getränkekenngröße und dem sich daraufhin einstellenden Wert der Strömungskenngröße einer die Getränkepumpe in einem Betriebsvorgang belastenden Last beschreibt. Die Lastkennlinie gibt insbesondere einen einer Förderung durch die Getränkepumpe entgegenwirkenden Strömungswiderstand an, welcher sich vorzugsweise aus einer Steigung der Lastkennlinie ergibt. Die Lastkennlinie ist insbesondere variierbar durch eine Variation einer Ausgestaltung des Leitungssystems. Beispielsweise kann die Lastkennlinie durch Aktivieren und/oder Deaktivieren, wie beispielsweise durch Hinzu- und/oder Wegschalten, von Bauteilen des Leitungssystems, variiert werden. Ferner ist denkbar, dass die Lastkennlinie während einer Standzeit durch Zusetzen von flüssigkeitsleitenden Bauteilen variiert. Ferner kann die Lastkennlinie insbesondere durch eine Eigenschaft einer Zubereitungszutat, wie beispielsweise durch einen Mahlgrad von Kaffeemehl, beeinflusst sein. Insbesondere in einem Arbeitspunkt befinden sich die von der Getränkepumpe zur Verfügung gestellte Förderleistung und die von dem Leitungssystem erzeugte Last im Gleichgewicht. Insbesondere soll unter einem "Arbeitspunkt" ein Schnittpunkt der Pumpenkennlinie und der Lastkennlinie verstanden werden.

Unter einer "Strömungskenngröße" soll insbesondere eine Kenngröße verstanden werden, welche ein Strömungsverhalten der Getränkeflüssigkeit innerhalb der Getränkemaschinenvorrichtung beschreibt. Die Strömungskenngröße ist insbesondere mit einem Druck, einem Durchfluss, insbesondere einem Volumenstrom und/oder Massenstrom, und/oder einer Durchströmungszeit, der Getränkeflüssigkeit korreliert und/oder mit diesem identisch. Unter einem "vorbestimmten Wert der Strömungskenngröße" soll insbesondere ein Wert verstanden werden, welcher durch eine Ausgestaltung der Getränkemaschinenvorrichtung und/oder werkseitig festlegbar, insbesondere hinterlegt, ist und/oder aus einem vorbestimmten Wertebereich, insbesondere vor einer Getränkezubereitung, auswählbar ist. Insbesondere bestimmen/bestimmt eine Ausgestaltung und/oder Einstellung der Regeleinheit im Wesentlichen den vorbestimmten Wert.

Unter einer "Regeleinheit" soll insbesondere eine zumindest teilweise, vorzugsweise zumindest zu einem Großteil und besonders bevorzugt vollständig, mechanische, hydrodynamische, elektrische und/oder elektronische Einheit zur Regelung der Strömungskenngröße verstanden werden. Vorzugsweise ist die Regeleinheit zumindest zu einem Großteil und besonders bevorzugt vollständig mechanisch und/oder hydrodynamisch ausgebildet und insbesondere höchstens zu einem Bruchteil elektrisch und/oder elektronisch. Unter einem "Bruchteil" soll insbesondere ein Teil verstanden werden, welcher kleiner als 50 %, vorzugsweise kleiner als 25 % und besonders bevorzugt kleiner als 5 % ist. Ist die Regeleinheit zumindest teilweise elektrisch und/oder elektronisch ausgebildet, umfasst diese insbesondere zumindest eine Regelelektronik. Unter einer "Regelelektronik" soll insbesondere eine Einheit mit einer Recheneinheit und mit einer Speichereinheit sowie mit einem in der Speichereinheit gespeicherten Regelprogramm, welches insbesondere dazu vorgesehen ist, von der Recheneinheit ausgeführt zu werden, verstanden werden. Besonders bevorzugt ist die Regeleinheit frei von einer Elektrik und/oder Elektronik. Alternativ oder zusätzlich ist denkbar, dass die Getränkemaschinenvorrichtung zumindest eine weitere Regeleinheit umfasst, welche dazu vorgesehen ist, eine weitere Strömungskenngröße zu regeln. Demnach könnte beispielsweise zwischen einem Regeln der Strömungskenngröße oder der weiteren Strömungskenngröße je nach Betrieb der jeweiligen Regeleinheit ausgewählt werden. Besonders bevorzugt weist die Getränkemaschinenvorrichtung lediglich eine, insbesondere eine einzige Regeleinheit auf. Die Regeleinheit ist von einem Bediener und/oder automatisch einstellbar. Insbesondere ist die Strömungskenngröße von einem Bediener und/oder automatisch an der Regeleinheit einstellbar. Beispielsweise kann die Regeleinheit dazu zumindest eine Einstelleinheit aufweisen, wie beispielsweise eine Stellschraube, ein Touchdisplay oder dergleichen. Insbesondere ist die Regeleinheit ein Bauteil des Leitungssystems. Besonders bevorzugt kann die Regeleinheit, insbesondere von einem Benutzer aktivierbar und/oder deaktivierbar sein. Die Regeleinheit ist insbesondere in einem aktiven Zustand zu einer Beeinflussung der Lastkennlinie vorgesehen. Ferner ist die Regeleinheit in einem deaktivierten Zustand dazu vorgesehen, die Lastkennlinie nicht wesentlich zu beeinflussen.

Unter einer "Hauptströmungsrichtung" soll in diesem Zusammenhang insbesondere eine Richtung verstanden werden, in die sich die zu fördernde Flüssigkeit gemittelt über eine Zeit, beispielsweise über die Dauer einer Portionenausgabe, bewegt.

Insbesondere kann die Getränkemaschinenvorrichtung zumindest eine Sensoreinheit umfassen. Unter einer "Sensoreinheit" soll insbesondere eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen, stattfinden kann. Insbesondere kann die Getränkemaschinenvorrichtung mehrere Sensoreinheiten umfassen. Vorzugsweise umfasst die Getränkemaschinenvorrichtung zumindest eine Sensoreinheit zur Sensierung der Strömungskenngröße. Die Sensoreinheit ist insbesondere als ein Durchflussmessgerät und/oder ein Druckmessgerät ausgebildet.

Die Zubereitungseinheit ist insbesondere Teil des Leitungssystems. Die Zubereitungseinheit weist insbesondere eine Temperiereinheit auf. Die Temperiereinheit ist zum Temperieren der Getränkeflüssigkeit und/oder einer Getränkezutat vorgesehen. Vorzugsweise ist die Temperiereinheit als eine Heizeinheit ausgebildet. Insbesondere weist die Temperiereinheit zumindest ein Heizelement auf, welches vorzugsweise als ein Heizdraht ausgebildet ist. Alternativ oder zusätzlich könnte die Temperiereinheit ein Kühlelement aufweisen. Die Zubereitungseinheit weist ferner insbesondere eine Brüheinheit auf. Die Brüheinheit weist eine Getränkezutatenaufnahme auf, wie beispielsweise für Kaffeepulver. Ferner ist die Getränkezutatenaufnahme insbesondere dazu vorgesehen, bei einer Förderung der Getränkeflüssigkeit von dieser durchflossen zu werden.

Ferner wird vorgeschlagen, dass die zumindest eine Regeleinheit zumindest teilweise einen Volumenstromregler ausbildet. Vorzugsweise ist die Regeleinheit dazu vorgesehen einen Volumenstrom der Getränkeflüssigkeit durch das Leitungssystem, insbesondere vor der Brüheinheit, zu regeln. Bevorzugt ist die Regeleinheit dazu vorgesehen einen in die Brüheinheit strömenden Volumenstrom der Getränkeflüssigkeit zu regeln. Besonders bevorzugt ist der Regeleinheit dazu vorgesehen, einen Durchfluss durch die Regeleinheit zu regeln, insbesondere auf einen konstanten Wert zu regeln. Dadurch kann insbesondere eine vorteilhafte Regeleinheit bereitgestellt werden. Ferner kann insbesondere durch eine Einstellbarkeit der Regeleinheit eine Flexibilität weiter verbessert werden. Insbesondere kann dadurch eine Einstellung der Regeleinheit auf einen definierten Volumenstromwert erreicht werden..

Des Weiteren wird vorgeschlagen, dass die Zubereitungseinheit zumindest eine Temperiereinheit aufweist, wobei die zumindest eine Regeleinheit fluidtechnisch zwischen der Getränkepumpe und der Temperiereinheit angeordnet ist. Vorzugsweise ist die zumindest eine Regeleinheit entlang einer Hauptströmungsrichtung der Getränkeflüssigkeit vor der Temperiereinheit angeordnet. Bevorzugt weist die Zubereitungseinheit die Temperiereinheit und die Brüheinheit auf, wobei die Temperiereinheit entlang einer Hauptströmungsrichtung der Getränkeflüssigkeit vor der Brüheinheit angeordnet ist. Dadurch kann insbesondere eine vorteilhafte Anordnung der Regeleinheit erreicht werden. Ferner kann dadurch eine Lautstärke, insbesondere eine von Außerhalb der Getränkemaschine hörbare Lautstärke, insbesondere der Getränkepumpe, gering gehalten werden. Mittels der Regeleinheit kann insbesondere eine Geräuschentwicklung eines Kolbens der Pumpe gering gehalten werden.

Es wird ferner vorgeschlagen, dass die zumindest eine Regeleinheit zumindest teilweise in die Getränkepumpe integriert ist. Vorzugsweise ist zumindest ein Teil der Regeleinheit in einem Gehäuse, insbesondere in einem Pumpengehäuse und/oder einem Kompressionskammergehäuse der Getränkepumpe angeordnet. Bevorzugt weist die Regeleinheit und die Getränkepumpe zumindest ein gemeinsames Bauteil und/oder ein gemeinsames Gehäuse auf. Insbesondere ist die Regeleinheit zumindest teilweise einstückig mit der Getränkepumpe ausgebildet. Unter "zumindest teilweise einstückig" soll in diesem Zusammenhang insbesondere verstanden werden, dass zumindest ein Bauteil zumindest eines Objekts und/oder zumindest ein erstes Objekt einstückig mit zumindest einem Bauteil zumindest eines weiteren Objekts und/oder einstückig mit zumindest einem weiteren Objekt ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Dadurch kann insbesondere eine vorteilhafte kompakte Getränkemaschinenvorrichtung bereitgestellt werden. Es kann insbesondere eine vorteilhaft kompakte Anordnung der Regeleinheit bereitgestellt werden. Ferner kann dadurch insbesondere eine Anzahl an Bauteilen gering gehalten werden.

Erfindungsgemäß weist die zumindest eine Regeleinheit zumindest einen Kolben mit einer Steuerfläche und zumindest ein fest mit dem Kolben verbundenes Ventilelement auf, welches zu einer direkten Veränderung eines Einlassquerschnitts vorgesehen ist. Vorzugsweise bildet die Steuerfläche eine Stirnseite des Kolbens. Die Steuerfläche wird insbesondere direkt mit einem Druck der Getränkeflüssigkeit beaufschlagt. Die Steuerfläche befindet sich insbesondere direkt in einem Volumenstrom der Getränkeflüssigkeit und ist einer Hauptströmungsrichtung entgegengewandt. Unter einer "Steuerfläche" soll in diesem Zusammenhang insbesondere eine Fläche, insbesondere eines beweglichen Teils der Regeleinheit, besonders bevorzugt des Kolbens der Regeleinheit, verstanden werden, welche zumindest zu einem wesentlichen Teil zu einer Steuerung und/oder Regelung einer Einstellung der Regeleinheit, insbesondere einer Ventilposition des Ventilelementes, vorgesehen ist. Vorzugsweise ist die Steuerfläche zu einer direkten Bewegung des Ventilelementes der Regeleinheit vorgesehen. Ferner sind verschiedene, einem Fachmann als sinnvoll erscheinende Ausgestaltungen des Ventilelements denkbar. Insbesondere ist das Ventilelement von einem beweglichen Ventilkörper gebildet, welches sich in einem Ventilsitz befindet, wobei sich abhängig von einer Relativposition des Ventilkörpers zu dem Ventilsitz ein Einlassquerschnitt verändert. Bevorzugt ist der Einlassquerschnitt insbesondere von einem zwischen dem Ventilkörper und dem Ventilsitz gebildeten Spalt gebildet. Vorzugsweise ist der Ventilkörper zumindest teilweise kegelförmig ausgebildet. Grundsätzlich wäre jedoch auch eine andere, einem Fachmann als sinnvoll erscheinende Form des Ventilkörpers denkbar, wie beispielsweise eine Kugelabschnittsform. Dadurch kann insbesondere eine vorteilhaft zuverlässige Steuerung und/oder Regelung durch die Regeleinheit erfolgen. Es kann insbesondere eine vorteilhaft mechanische und/oder hydrodynamische Regelung eines Volumenstroms durch die Regeleinheit erreicht werden.

Erfindungsgemäß weist die zumindest eine Regeleinheit zumindest eine Blende mit zumindest einer Blendöffnung auf, die zu einer Regelung der Strömungskenngröße, insbesondere des Volumenstroms, der Getränkeflüssigkeit dazu vorgesehen ist, einen Staudruck zu erzeugen. Vorzugsweise ist die Blende zumindest teilweise, insbesondere vollständig, in einem Volumenstrom der Getränkeflüssigkeit angeordnet. Bevorzugt ist die Blende dazu vorgesehen abhängig von einem Volumenstrom und/oder einem Druck der Getränkeflüssigkeit an der Blende eine definierte Menge Getränkeflüssigkeit durch die zumindest eine Blendöffnung passieren zu lassen. Vorzugsweise passiert ein wesentlicher Teil, insbesondere zumindest 30%, vorzugsweise zumindest 60% und besonders bevorzugt zumindest 90%, einer die Regeleinheit passierenden Getränkeflüssigkeit die zumindest eine Blendöffnung. Bevorzugt ist die Blende dazu vorgesehen zu einer Regelung des Volumenstroms, einen Staudruck zu erzeugen, welcher zu einer direkten oder indirekten Steuerung einer Position, insbesondere einer Ventilposition, des Ventilelements vorgesehen ist. Hierdurch kann insbesondere eine vorteilhafte Regelung des Volumenstroms erreicht werden. Es kann insbesondere eine vorteilhaft mechanische und/oder hydrodynamische Regelung eines Volumenstroms durch die Regeleinheit erreicht werden.

Erfindungsgemäß ist die zumindest eine Blende der zumindest einen Regeleinheit einstückig mit dem zumindest einen Kolben ausgebildet oder zumindest teilweise separat ausgebildet und mit dem Kolben verbunden. Vorzugsweise ist die zumindest eine Blendöffnung direkt in den Kolben eingebracht. Bevorzugt bildet die Blende einen Teil der Steuerfläche des Kolbens aus. Vorzugsweise bildet die Blende die Steuerfläche des Kolbens vollständig aus. Es wird ferner vorgeschlagen, dass die zumindest eine Blendöffnung der Blende direkt in einen Kolbengrundkörper des Kolbens eingebracht ist. Bevorzugt erstreckt sich die zumindest eine Blendöffnung zumindest im Wesentlichen parallel zu einer Führungsachse des Kolbens durch den Kolbengrundkörper des Kolbens. Die zumindest eine Blendöffnung ist insbesondere von einer Bohrung gebildet. Vorzugsweise ist die Blendöffnung insbesondere von einer in den Kolbengrundkörper eingebrachten Bohrung gebildet. Unter "zumindest im Wesentlichen" soll in diesem Zusammenhang insbesondere verstanden werden, dass eine Abweichung von einem vorgegebenen Wert insbesondere weniger als 25%, vorzugsweise weniger als 10% und besonders bevorzugt weniger als 5% des vorgegebenen Werts beträgt. Hierdurch kann insbesondere eine vorteilhaft direkte Regelung des Volumenstroms erreicht werden. Es kann insbesondere eine vorteilhaft mechanische und/oder hydrodynamische Regelung eines Volumenstroms durch die Regeleinheit erreicht werden. Ferner kann dadurch insbesondere eine direkte Steuerung der Position des Ventilelements mittels der Blende erreicht werden. Insbesondere kann dadurch bei einer Auslegung der Regeleinheit eine Dichtigkeit des Kolbens mitberücksichtigt werden. Insbesondere kann der Kolben mit einer Dichtung in einer Übergangspassung in einem Zylinder geführt werden. Es kann vorzugsweise ein Toleranzausgleich gering gehalten werden. Ferner kann insbesondere auf eine Verpressung eines Dichtungsrings des Kolbens in dem Zylinder, was insbesondere zu einer Schwergängigkeit des Kolbens führen würde, verzichtet werden.

Ferner geht die Erfindung aus von einer Regeleinheit für die Getränkemaschinenvorrichtung. Es wird vorgeschlagen, dass die Regeleinheit zumindest einen Kolben mit einer Steuerfläche aufweist, zumindest ein fest mit dem Kolben verbundenes Ventilelement, welches zu einer direkten Veränderung eines Einlassquerschnitts vorgesehen ist, und zumindest eine einstückig mit dem Kolben ausgebildete Blende mit einer Blendöffnung, die zu einer Regelung des Volumenstroms dazu vorgesehen ist, einen Staudruck zu erzeugen. Vorzugsweise ist die zumindest eine Blendöffnung direkt in den Kolben eingebracht. Bevorzugt bildet die Blende einen Teil der Steuerfläche des Kolbens aus. Dadurch kann insbesondere eine vorteilhafte Regeleinheit bereitgestellt werden. Es kann insbesondere eine vorteilhaft variable und kompakte Regeleinheit bereitgestellt werden.

Des Weiteren geht die Erfindung aus von einem Verfahren zu einem Betrieb der Getränkemaschinenvorrichtung. Es wird vorgeschlagen, dass der Kolbengrundkörper des Kolbens der Regeleinheit von einem wesentlichen Teil der gepumpten Getränkeflüssigkeit durchströmt wird. Vorzugsweise wird der Kolbengrundkörper des Kolbens der Regeleinheit über die Blendöffnung der Blende von einem wesentlichen Teil, insbesondere zumindest 80%, vorzugsweise zumindest 90% und besonders bevorzugt zumindest 100%, der gepumpten Getränkeflüssigkeit durchströmt. Bevorzugt bildet der Kolbengrundkörper zumindest abschnittsweise einen Strömungskanal der Getränkeflüssigkeit aus. Grundsätzlich wäre jedoch auch denkbar, dass der Kolben in zumindest einem Betriebszustand und/oder dauerhaft zumindest teilweise oder vollständig von der Getränkeflüssigkeit umströmt wird. Hierdurch könnte beispielsweise auf die Blendöffnung in dem Kolben verzichtet werden.

Die erfindungsgemäße Getränkemaschinenvorrichtung, sowie die Regeleinheit und das Verfahren sollen hierbei nicht auf die oben beschriebene Anwendung und Ausführungsform beschränkt sein. Insbesondere können die erfindungsgemäße Getränkemaschinenvorrichtung, sowie die Regeleinheit und das Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Getränkemaschine mit einer erfindungsgemäßen Getränkemaschinenvorrichtung in einer perspektivischen Ansicht,
- Fig. 2: eine schematische Teilschnittdarstellung eines Teils der erfindungsgemäßen Getränkemaschinenvorrichtung mit einer Regeleinheit,
- Fig. 3: die Regeleinheit mit einem Kolben und einem Ventilelement in einer schematischen Schnittdarstellung und
- Fig. 4: einen schematischen Ablaufplan eines Verfahrens zum Betrieb der Getränkemaschinenvorrichtung.

### Beschreibung des Ausführungsbeispiels

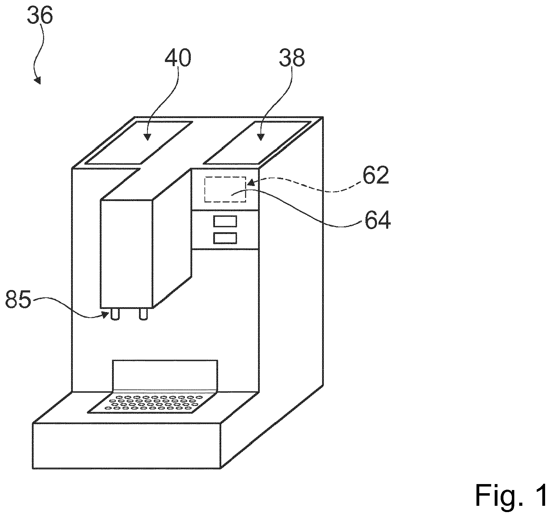

Die Figur 1 zeigt eine Getränkemaschine 36 mit einer Getränkemaschinenvorrichtung 10. Die Getränkemaschine 36 ist im vorliegenden Fall zur Bereitung von Warm- und/oder Heißgetränken vorgesehen. Die Getränkemaschine 36 ist als eine Kaffeemaschine ausgebildet. Ferner ist im vorliegenden Fall die Getränkemaschine 36 als ein Kaffeevollautomat ausgebildet. Alternativ oder zusätzlich könnte die Getränkemaschine 36 zur Bereitung weiterer Getränke, insbesondere weiterer Heißgetränke, vorgesehen sein, wie beispielsweise Kakao oder Tee. Zudem sind Ausgestaltungen der Getränkemaschine 36 denkbar, bei welcher diese Kaltgetränke bereitet, wie beispielsweise Saft oder einen Softdrink. Denkbar ist, dass die Kaffeemaschine auch als eine Portionskaffeemaschine ausgebildet sein könnte. Die Getränkemaschinenvorrichtung 10 bildet einen Teil der Getränkemaschine 36 aus. Die Getränkemaschinenvorrichtung 10 ist von einer Kaffeemaschinenvorrichtung gebildet.

Die Getränkemaschinenvorrichtung 10 weist zumindest einen Zutatenspeicher 38 auf. Der Zutatenspeicher 38 ist zur Bereitstellung zumindest einer Getränkezutat für ein Getränk vorgesehen. Im vorliegenden Fall ist der Zutatenspeicher 38 zur Bereitstellung von Kaffeebohnen und/oder Kaffeepulver vorgesehen. Der Zutatenspeicher 38 ist im vorliegenden Fall als ein Vorratsbehälter ausgebildet. Ferner weist die Getränkemaschinenvorrichtung 10 eine Mühle (nicht dargestellt) auf, welche zur Verarbeitung der Getränkezutat vorgesehen ist. Vorteilhaft ist ein Mahlgrad der Mühle einstellbar. Mittels der Mühle sind Kaffeebohnen zu Kaffeepulver weiter verarbeitbar.

Zur Bereitung von Getränken sieht die Getränkemaschinenvorrichtung 10 die Verwendung einer Getränkeflüssigkeit 14 vor. Im vorliegenden Fall handelt es sich bei der Getränkeflüssigkeit 14 um Wasser. Strömt die Getränkeflüssigkeit 14 durch die Getränkemaschinenvorrichtung 10, kann diese anhand von Strömungskenngrößen physikalisch beschrieben werden, und zwar insbesondere mittels zumindest einer Strömungskenngröße. Im vorliegenden Fall entspricht die Strömungskenngröße einem Durchfluss, insbesondere einem Volumenstrom, der Getränkeflüssigkeit 14.

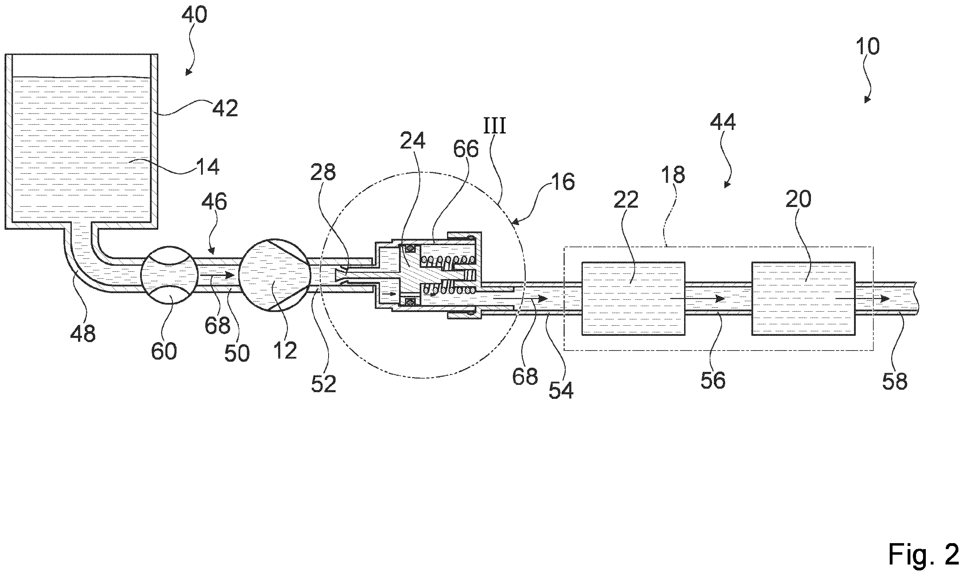

Zur Bereitstellung einer Getränkeflüssigkeit 14 weist die Getränkemaschinenvorrichtung 10 einen Getränkeflüssigkeitsspeicher 40 auf. Der Getränkeflüssigkeitsspeicher 40 umfasst einen Getränkeflüssigkeitstank 42. Der Getränkeflüssigkeitstank 42 ist mit der Getränkeflüssigkeit 14 befüllbar (vgl. Figur 2). Beispielsweise kann der Getränkeflüssigkeitstank 42 von einem Bediener manuell befüllt werden. Ferner wäre denkbar, dass der Getränkeflüssigkeitsspeicher 40 einen Getränkeflüssigkeitsanschluss umfasst, wobei der Getränkeflüssigkeitsanschluss mit dem Getränkeflüssigkeitstank 42 fluidtechnisch verbunden ist. Der Getränkeflüssigkeitsanschluss ist mit einer Getränkeflüssigkeitsversorgung, wie beispielsweise einem Wasserhahn, verbindbar. Derart kann der Getränkeflüssigkeitstank 42 vorteilhaft automatisch über den Getränkeflüssigkeitsanschluss befüllt werden.

In Figur 2 ist eine schematische Darstellung eines Teils der Getränkemaschinenvorrichtung 10 gezeigt. Die Getränkemaschinenvorrichtung 10 weist ein Leitungssystem 44 auf. Das Leitungssystem 44 ist zur Leitung einer Getränkeflüssigkeit 14 durch die Getränkemaschinenvorrichtung 10 vorgesehen. Das Leitungssystem 44 weist zumindest einen Leitkanal 46 auf. Der Leitkanal 46 leitet die Getränkeflüssigkeit 14. Ferner verbindet der Leitkanal 46 weitere, die Getränkeflüssigkeit 14 führende Bauteile der Getränkemaschinenvorrichtung 10 miteinander. Der Leitkanal 46 weist mehrere Teilkanäle 48, 50, 52, 54, 56, 58 auf, welche die weiteren, die Getränkeflüssigkeit 14 leitenden Bauteile der Getränkemaschinenvorrichtung 10 fluidtechnisch miteinander verbinden. Ferner umfasst das Leitungssystem 44 alle die Getränkeflüssigkeit 14 leitenden Bauteile der Getränkemaschinenvorrichtung 10. Eine Getränkepumpe 12 kann mit dem Leitungssystem 44 angeschlossen bzw. verbunden sein. Die Getränkepumpe 12 ist selbst idealisiert betrachtet jedoch nicht Teil des Leitungssystems 44, da diese die Getränkeflüssigkeit 14 aktiv fördert. Das Leitungssystem 44 bildet eine Last, mit welcher die Getränkepumpe 12 in einem Betrieb beaufschlagt ist, wenn diese die Getränkeflüssigkeit 14 fördert.

Die Getränkemaschinenvorrichtung 10 weist zumindest eine Sensoreinheit 60 auf. Die Sensoreinheit 60 ist in einem Betriebszustand von der Getränkeflüssigkeit 14 durchströmt. Die Sensoreinheit 60 bildet zumindest teilweise das Leitungssystem 44 aus. Die Sensoreinheit 60 ist fluidtechnisch dem Getränkeflüssigkeitsspeicher 40 nachgeschaltet. Die Sensoreinheit 60 ist mittels des Teilkanals 48 des Leitkanals 46 mit dem Getränkeflüssigkeitsspeicher 40 verbunden. Ein erster Anschluss des Teilkanals 48 ist mit dem Getränkeflüssigkeitsspeicher 40 verbunden. Ein zweiter Anschluss des Teilkanals 48 ist mit der Sensoreinheit 60 verbunden. Im vorliegenden Fall ist die Sensoreinheit 60 zur Detektion der weiteren Strömungskenngröße vorgesehen. Die Sensoreinheit 60 ist demnach als ein Durchflussmessgerät, wie beispielsweise ein Flowmeter, ausgebildet. Es wäre jedoch auch denkbar, dass die Getränkemaschinenvorrichtung 10 frei von der Sensoreinheit 60 ist. Dabei wäre insbesondere denkbar, dass ein Durchfluss über die Zeit berechnet wird und dadurch auf die Sensoreinheit 60 verzichtet werden kann.

Die Getränkemaschinenvorrichtung 10 weist zumindest die Getränkepumpe 12 auf. Im vorliegenden Fall weist die Getränkemaschinenvorrichtung 10 eine einzige Getränkepumpe 12 auf. Die Getränkepumpe 12 ist der Sensoreinheit 60 fluidtechnisch nachgeschaltet. Demnach ist die Sensoreinheit 60 fluidtechnisch zwischen dem Getränkeflüssigkeitsspeicher 40 und der Getränkepumpe 12 angeordnet. Alternativ könnte der Sensor auch an einer anderen, von einem Fachmann als vorteilhaft angesehenen Position entlang dem Leitungssystem 44 angeordnet sein. Die Getränkepumpe 12 ist über einen Teilkanal 50 mit dem Leitungssystem 44 verbunden. Ferner ist die Getränkepumpe 12 über einen Teilkanal 52 mit dem Leitungssystem 44 verbunden. Die Getränkepumpe 12 ist mittels des Teilkanals 50 des Leitkanals 46 mit der Sensoreinheit 60 fluidtechnisch verbunden. Ein erster Anschluss des Teilkanals 50 ist mit der Sensoreinheit 60 verbunden. Ein zweiter Anschluss des Teilkanals 50 ist mit der Getränkepumpe 12 verbunden.

Die Getränkepumpe 12 ist zumindest teilweise lebensmittelecht ausgebildet. Zumindest Bauteile der Getränkepumpe 12, welche mit der Getränkeflüssigkeit 14 in Kontakt kommen, sind lebensmittelecht ausgebildet. Die Getränkepumpe 12 ist im vorliegenden Fall als eine Schwingankerpumpe ausgebildet. Die Getränkepumpe 12 ist zur Förderung der Getränkeflüssigkeit 14 vorgesehen. Die Fördereigenschaften zur Förderung der Getränkeflüssigkeit 14 der Getränkepumpe 12 sind durch eine Pumpenkennlinie beschrieben. Die Pumpenkennlinie beschreibt einen Zusammenhang zwischen einem von der Getränkepumpe 12 erzeugten Wert eines Drucks der Getränkeflüssigkeit 14 und dem sich daraufhin einstellenden Wert der Strömungskenngröße. Die Pumpenkennlinie ist dabei ein Maß für eine Leistungsfähigkeit der Getränkepumpe 12.

Zur Ansteuerung der Getränkepumpe 12 weist die Getränkemaschinenvorrichtung 10 zumindest eine Steuereinheit 62 auf. Die Steuereinheit 62 ist elektrisch mit der Getränkepumpe 12 verbunden. Die Steuereinheit 62 stellt der Getränkepumpe 12 eine Wechselspannung von 230 V zur Verfügung. Die Wechselspannung weist dabei eine Frequenz von 50 Hz auf. Alternativ kann auch eine für einen Fachmann vorteilhafte, insbesondere länderspezifische Netzspannung als Wechselspannung zur Verfügung gestellt werden, wie beispielsweise eine Wechselspannung von 120 V mit einer Frequenz von 60 Hz, eine Wechselspannung von 100 V mit einer Frequenz von 50 Hz oder dergleichen. Die Steuereinheit 62 weist dazu ein spannungsgeregeltes Netzteil (nicht dargestellt) auf.

Ferner weist die Getränkemaschinenvorrichtung 10 zumindest eine Regeleinheit 16 auf. Die Regeleinheit 16 ist in zumindest einem Betriebszustand zumindest teilweise von der Getränkeflüssigkeit 14 durchflossen. Die Regeleinheit 16 bildet zumindest teilweise das Leitungssystem 44 aus. Die Regeleinheit 16 ist fluidtechnisch der Getränkepumpe 12 nachgeschaltet. Demnach ist die Getränkepumpe 12 fluidtechnisch zumindest teilweise zwischen der Sensoreinheit 60 und der Regeleinheit 16 angeordnet. Die Regeleinheit 16 ist über einen Teilkanal 52 mit der Getränkepumpe 12 fluidtechnisch verbunden. Ein erster Anschluss des Teilkanals 52 ist mit der Getränkepumpe 12 fluidtechnisch verbunden. Ein zweiter Anschluss des Teilkanals 52 ist fluidtechnisch mit der Regeleinheit 16 verbunden. Die Regeleinheit 16 ist von einer im Wesentlichen mechanischen Regeleinheit gebildet. Die Regeleinheit 16 ist dazu vorgesehen, die Strömungskenngröße der Getränkeflüssigkeit 14 einzuregeln. Die Regeleinheit 16 ist dazu vorgesehen, die Strömungskenngröße zumindest im Wesentlichen auf wenigstens einen vorbestimmten Wert einzuregeln. Der Wert der Strömungskenngröße ist vorbestimmbar. Beispielsweise kann der vorbestimmte Wert der Strömungskenngröße von einem Bediener und/oder automatisch, insbesondere in Abhängigkeit einer Getränkevariante, vorgegeben und/oder eingestellt werden.

Die Regeleinheit 16 ist im vorliegenden Fall als ein einen Volumenstromregler ausbildet. Die Regeleinheit 16 weist ein Gehäuse 66 auf. Das Gehäuse 66 ist zweiteilig ausgebildet. Das Gehäuse 66 weist ein Topfgehäuseelement 80 und ein Deckelgehäuseelement 82 auf. Das Gehäuse 66 bildet einen Kanal aus, welcher dazu vorgesehen ist, die Getränkeflüssigkeit 14 zu führen. Das Gehäuse 66, begrenzt in einem Betrieb die Getränkeflüssigkeit 14. Ferner weit die Regeleinheit 16 einen Kolben 24 mit einer Steuerfläche 26 auf. Der Kolben 24 ist in dem Gehäuse 66 geführt. Das Gehäuse 66 bildet einen Führungszylinder für den Kolben 24 aus. Der Kolben 24 weist einen zylindrische Kolbengrundkörper 34 auf. Der Kolbengrundkörper 34 ist über Dichtungen 70, insbesondere Dichtungsringe, an dem Gehäuse 66, insbesondere an dem Topfgehäuseelement 80, angedichtet. Ferner weist der Kolben 24 einen Führungsfortsatz 76 auf, welcher zu einer axialen Führung des Kolbens 24 dient. Der Führungsfortsatz 76 ist in einer Hülse 78 des Gehäuses 66 axial geführt. Die Hülse 78 ist an dem Deckelgehäuseelement 82 angeordnet. Der Führungsfortsatz 76 weist einen Anschlagsabsatz auf, welcher dazu vorgesehen ist, einen Anschlag des Kolbens 24 entlang der Hauptströmungsrichtung 68 auszubilden. Der Anschlagsabsatz ist dazu vorgesehen, an der Hülse 78 anzuschlagen. Ferner weist das Topfgehäuseelement 80 des Gehäuses 66 ebenfalls einen Anschlagsabsatz auf, welcher dazu vorgesehen ist, einen Anschlag des Kolbens 24, für eine Bewegung entgegen der Hauptströmungsrichtung 68 auszubilden. Der Kolbengrundkörper 34 ist dazu vorgesehen, an dem Anschlagsabsatz des Topfgehäuseelements 80 anzuschlagen. Die Regeleinheit 16 weist ferner ein fest mit dem Kolben 24 verbundenes Ventilelement 28 aufweist, welches zu einer direkten Veränderung eines Einlassquerschnitts vorgesehen ist. Das Ventilelement 28 weist einen beweglichen Ventilkörper 72 auf, der über einen Steg direkt mit dem Kolben 24 verbunden ist. Der Steg kann dabei beispielweise einstückig mit dem Kolben 24 ausgebildet sein oder alternativ beispielsweise mittels einer Schraub- und/oder Steckverbindung mit dem Kolben 24 verbunden sein. Bei einer einstückigen Ausbildung wäre beispielsweise denkbar, dass ein Ventilsitz 74 des Gehäuses 66 elastisch ausgebildet ist, und der Ventilkörper 72 bei einer Montage durch eine Öffnung des Ventilsitzes 74 hindurchgedrückt werden muss. Der Steg schließt an der Steuerfläche 26 an den Kolben 24 an. Der Ventilkörper 72 befindet sich in dem Ventilsitz 74 des Gehäuses 66, wobei sich abhängig von einer Relativposition des Ventilkörpers 72 zu dem Ventilsitz 74 ein Einlassquerschnitt verändert. Mittels der Anschlagsabsätze wird jeweils ein maximaler Einlassquerschnitt sowie ein minimaler Einlassquerschnitt definiert. Das Ventilelement 28 ist dabei in jeder Betriebsstellung, insbesondere auch mit einem minimalen Einlassquerschnitt, geöffnet. Das Topfgehäuseelement 80 weist den Ventilsitz 74 auf. Der Einlassquerschnitt ist von einem zwischen dem Ventilkörper 72 und dem Ventilsitz 74 gebildeten Spalt gebildet. Der Ventilkörper 72 ist kegelförmig ausgebildet. Grundsätzlich wäre jedoch auch eine andere, einem Fachmann als sinnvoll erscheinende Form des Ventilkörpers 72 denkbar, wie beispielsweise eine Kugelabschnittsform. In dem Betriebszustand öffnet oder schließt die Regeleinheit 16 in Abhängigkeit von einem auf die Steuerfläche 26 wirkenden Druck das Leitungssystem 44 durch Bewegung des Ventilelements 28. Im vorliegenden Ausführungsbeispiel ist der auf die Steuerfläche 26 wirkende Druck ein Fluiddruck der Getränkeflüssigkeit 14. Die Steuerfläche 26 ist einer Hauptströmungsrichtung 68 der Getränkeflüssigkeit 14 zugewandt. Die Steuerfläche 26 ist fluidtechnisch hinter dem Ventilelement 28 angeordnet.

Des Weiteren weist die Regeleinheit 16 eine Blende 30 mit zumindest einer Blendöffnung 32 auf, die zu einer Regelung der Strömungskenngröße, insbesondere des Volumenstroms, dazu vorgesehen ist, einen Staudruck zu erzeugen. Die Blende 30 weist beispielhaft genau eine Blendöffnung 32 auf. Es wäre jedoch auch denkbar, dass die Blende 30 mehrere, insbesondere zumindest zwei, vorzugsweise zumindest vier Blendöffnungen 32 aufweist. Die Blende 30 ist in einem Volumenstrom der Getränkeflüssigkeit 14 angeordnet. Die Blende 30 ist dazu vorgesehen abhängig von einem Volumenstrom und/oder einem Druck der Getränkeflüssigkeit 14 an der Blende 30 eine definierte Menge Getränkeflüssigkeit 14 durch die zumindest eine Blendöffnung 32 passieren zu lassen. Die Blende 30 der Regeleinheit 16 ist beispielhaft einstückig mit dem Kolben 24 ausgebildet. Die Blende 30 bildet einen Teil der Steuerfläche 26 des Kolbens 24 aus. Die Blende 30 bildet die Steuerfläche 26 des Kolbens 24 vollständig aus. Die Blendöffnung 32 der Blende 30 ist direkt in den Kolbengrundkörper 34 des Kolbens 24 eingebracht. Die Blendöffnung 32 erstreckt sich parallel zu einer Führungsachse des Kolbens 24 durch den Kolbengrundkörper 34 des Kolbens 24. Die zumindest eine Blendöffnung 32 ist von einer Bohrung gebildet.

Der Regeleinheit 16 weist ferner ein Federelement 84 auf. Das Federelement 84 ist als eine Druckfeder ausgebildet. In dem Betriebszustand ist das Federelement 84 in Kontakt mit dem Kolben 24 angeordnet. Das Federelement 84 ist in dem Betriebszustand in Kontakt mit dem Kolbengrundkörper 34. Das Federelement 84 beaufschlagt den Kolben 24 in dem Betriebszustand mit einer Federkraft. In dem Betriebszustand wirkt das Federelement 84 einer durch die Getränkeflüssigkeit 14 an der Steuerfläche 26 erzeugten Kraft entgegen. Das Federelement 84 stützt sich zwischen dem Kolben 24 und dem Gehäuse 66 ab. Das Federelement 84 stützt sich zwischen dem Kolbengrundkörper 34 und dem Deckelgehäuseelement 82 ab. Das Federelement 84 umgreift die Hülse 78. Vorzugsweise ist eine Federvorspannung des Federelements 84, nicht weiter dargestellt, einstellbar. Dabei wäre insbesondere denkbar, dass die Federvorspannung des Federelements 84 werkseitig definiert eingestellt wird, ein Bediener die Federvorspannung des Federelements 84 manuell einstellen kann und/oder eine Federvorspannung des Federelements 84 selbsttätig während eines Betriebs eingestellt wird, wie beispielsweise mittels eines Elektromotors. Durch Einstellung der Federvorspannung des Federelements 84 kann insbesondere ein mittels der Regeleinheit 16 eingeregelter Volumenstrom verändert werden.

In dem Betriebszustand verändert sich eine Spaltweite des Ventilelements 28 der Regeleinheit 16 in Abhängigkeit von einem auf die Steuerfläche 26 wirkenden Druck, welcher sich durch einen Differenzdruck an der Blende 30, insbesondere der Blendöffnung 32 der Blende 30, aufbaut. Der Differenzdruck besteht insbesondere zwischen einer strömungsabgewandten Seite des Kolbens und einer strömungszugewandten Seite des Kolbens. Ist eine aus dem Staudruck abgeleitete auf die Steuerfläche 26 wirkende Kraft größer als eine von einem Federelement 84 der Regeleinheit 16 auf den Kolben 24 wirkende Federkraft, verringert sich der Einlassquerschnitt des Ventilelements 28, ausgehend von einem Maximalwert kontinuierlich, abhängig von dem Volumenstrom an dem Kolben 24, bis auf den Minimalwert. Für den umgekehrten Fall öffnet sich dieses weiter. Ein Volumenstrom der Getränkeflüssigkeit 14 wird so geregelt. Mittels einer Anpassung der Federvorspannung des Federelements 84 und/oder einer Anordnung der Anschlagsabsätze und/oder einer Größe der Blendöffnung 32 kann insbesondere eine Kennlinie der Regeleinheit 16 angepasst werden. Es sind verschiedene, einem Fachmann als sinnvoll erscheinende Kennlinien der Regeleinheit 16 denkbar. Insbesondere kann durch eine Anpassung des Anschlagsabsatzes des Führungsfortsatzes 76 des Kolbens 24 erreicht werden, dass ein Volumenstrom bei geringem Druck erhöht ist und sich erst ab einem definierten Druck auf einen konstanten Wert einregelt. Die Regeleinheit 16 kann daher insbesondere eine Kennlinie aufweisen, mittels der Getränke, bei denen ein hoher Volumenstrom im niedrigen Druckbereich gewünscht ist, schnell gezapft werden können, wohingegen der Bereich von Kaffee, also insbesondere beispielsweise zumindest zwischen 8 bar und 16 bar, einen nahezu konstanten Durchfluss aufweist. Hierdurch kann erreicht werden, dass sich unterschiedliche Strömungswiderstände von z.B. eingelegten Kapseln und/oder verschieden gemahlenem Kaffee nicht auf die Bezugszeit auswirkt. Zur Erreichung einer entsprechenden Kennlinie, wird insbesondere der Anschlagsabsatz des Führungsfortsatzes 76 des Kolbens 24 derart angeordnet, dass sich ein definierter minimaler Einlassquerschnitt des Ventilelements 28 ergibt.

In der dargestellten Ausgestaltung ist die Regeleinheit 16 von der Getränkepumpe 12 getrennt ausgebildet. Es wäre jedoch auch denkbar, dass die eine Regeleinheit 16 teilweise in die Getränkepumpe 12 integriert ist. Insbesondere kann ein Teil der Regeleinheit 16 in einem Gehäuse, insbesondere in einem Pumpengehäuse und/oder einem Kompressionskammergehäuse, der Getränkepumpe 12 angeordnet sein. Bevorzugt weist die Regeleinheit 16 und die Getränkepumpe 12 zumindest ein gemeinsames Bauteil und/oder ein gemeinsames Gehäuse auf. Insbesondere ist die Regeleinheit 16 zumindest teilweise einstückig mit der Getränkepumpe 12 ausgebildet. Bevorzugt ist das Ventilelement 28 der Regeleinheit 16 einstückig mit einem Ventil einer Kompressionskammer der Getränkepumpe 12 ausgebildet.

Die Getränkemaschinenvorrichtung 10 weist eine Zubereitungseinheit 18 auf. Die Zubereitungseinheit 18 bildet zumindest teilweise das Leitungssystem 44 aus. Die Zubereitungseinheit 18 ist fluidtechnisch hinter der Regeleinheit 16 angeordnet. Demnach ist die Regeleinheit 16 fluidtechnisch zwischen der Getränkepumpe 12 und der Zubereitungseinheit 18 angeordnet. Die Zubereitungseinheit 18 ist mittels des Teilkanals 54 fluidtechnisch mit der Regeleinheit 16 verbunden. Ein erster Anschluss des Teilkanals 54 ist mit der Regeleinheit 16 fluidtechnisch verbunden. Ein zweiter Anschluss des Teilkanals 54 ist mit der Zubereitungseinheit 18 verbunden. Die Zubereitungseinheit 18 ist zur Zubereitung des Getränks vorgesehen. Im vorliegenden Fall ist die Zubereitungseinheit 18 zum Aufbrühen des Getränks vorgesehen ist.

Die Zubereitungseinheit 18 weist eine Temperiereinheit 22 auf. Die Temperiereinheit 22 bildet zumindest teilweise das Leitungssystem 44 aus. Die Temperiereinheit 22 ist der Regeleinheit 16 fluidtechnisch nachgeschaltet. Die Temperiereinheit 22 ist mit dem zweiten Anschluss des Teilkanals 54 fluidtechnisch verbunden. Demnach ist die Regeleinheit 16 fluidtechnisch zwischen der Getränkepumpe 12 und der Temperiereinheit 22 angeordnet. Die Temperiereinheit 22 ist zum Temperieren der Getränkeflüssigkeit 14 vorgesehen. Im vorliegenden Fall ist die Temperiereinheit 22 als eine Heizeinheit ausgebildet. Dazu kann die Temperiereinheit 22 beispielsweise einen Heizdraht aufweisen. Alternativ oder zusätzlich könnte die Temperiereinheit 22 zu einem Kühlen der Getränkeflüssigkeit 14 vorgesehen sein.

Die Zubereitungseinheit 18 weist ferner eine Brüheinheit 20 auf. Die Brüheinheit 20 bildet zumindest teilweise das Leitungssystem 44 aus. Die Brüheinheit 20 ist der Temperiereinheit 22 fluidtechnisch nachgeschaltet. Die Temperiereinheit 22 ist demnach fluidtechnisch zwischen der Regeleinheit 16 und der Brüheinheit 20 angeordnet. Die Regeleinheit 16 ist fluidtechnisch vor der Brüheinheit 20 angeordnet. Die Regeleinheit 16 ist in Hauptströmungsrichtung 68 vor der Brüheinheit 20 angeordnet. Die Brüheinheit 20 ist mittels eines Teilkanals 56 mit der Temperiereinheit 22 fluidtechnisch verbunden. Ein erster Anschluss des Teilkanals 56 ist mit der Temperiereinheit 22 verbunden. Ein zweiter Anschluss des Teilkanals 56 ist mit der Brüheinheit 20 fluidtechnisch verbunden. Die Brüheinheit 20 weist eine Zutatenaufnahme (nicht dargestellt) auf. Die Zutatenaufnahme ist mit dem Zutatenspeicher 38 verbunden. Derart kann die Zutatenaufnahme mit einer Getränkezutat aus dem Zutatenspeicher 38 befüllt werden. Ferner ist die Zutatenaufnahme dazu vorgesehen, bei einer Förderung der Getränkeflüssigkeit 14 von dieser durchflossen zu werden. Dazu ist die Zutatenaufnahme siebartig ausgebildet.

Die Getränkemaschinenvorrichtung 10 weist ferner eine Getränkeausgabeeinheit 85 auf. Die Getränkeausgabeeinheit 85 bildet zumindest teilweise das Leitungssystem 44 aus. Die Getränkeausgabeeinheit 85 ist nicht weiter sichtbar fluidtechnisch der Brüheinheit 20 nachgeschaltet. Die Getränkeausgabeeinheit 85 ist fluidtechnisch mittels eines Teilkanals 58 mit der Brüheinheit 20 verbunden. Ein erster Anschluss des Teilkanals 58 ist fluidtechnisch mit der Brüheinheit 20 verbunden. Ein zweiter Anschluss des Teilkanals 58 ist fluidtechnisch mit der Getränkeausgabeeinheit 85 verbunden. Die Getränkeausgabeeinheit 85 ist zu einer Ausgabe des bereiteten Getränks vorgesehen.

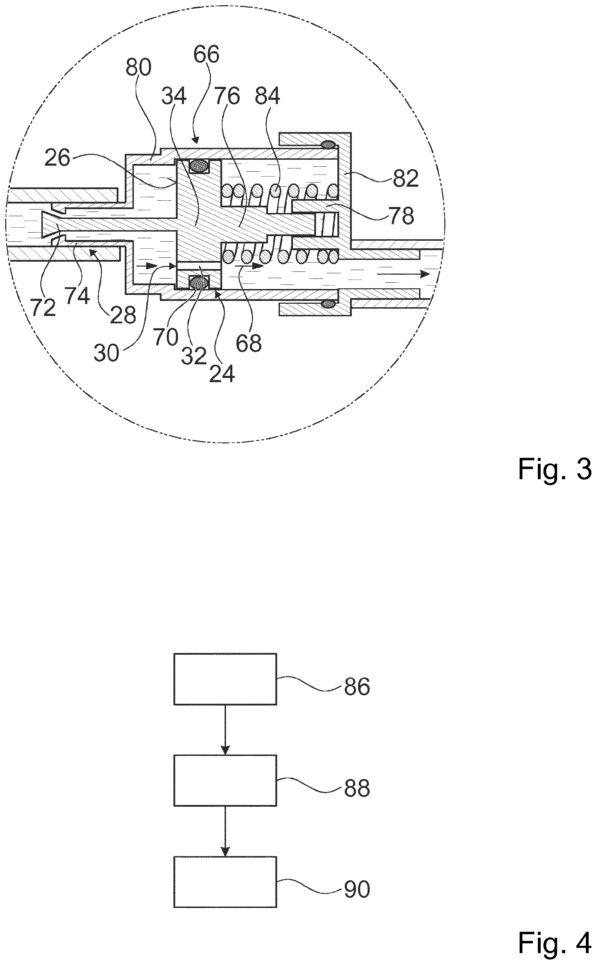

Figur 4 zeigt einen schematischen Ablaufplan eines Verfahrens zum Betrieb der Getränkemaschinenvorrichtung 10.

Das Verfahren umfasst einen Verfahrensschritt 86. In dem Verfahrensschritt 86 wird eine Getränkezubereitung einer Getränkevariante zumindest teilweise durchgeführt. Ein Bediener wählt die Getränkevariante aus. Im vorliegenden Fall wählt der Bediener als Getränkevariante beispielsweise einen Espresso zur Bereitung aus. Dazu betätigt der Bediener ein Auswahlfeld der Steuereinheit 62, insbesondere des Bedienelements 64 der Steuereinheit 62. Die Steuereinheit 62 initialisiert einen Bereitungsprozess. Die Steuereinheit 62 ruft Zubereitungsparameter für die Bereitung der gewählten Getränkevariante ab. Als ein Zubereitungsparameter ruft die Steuereinheit 62 einen vorbestimmten Mahlgrad und/oder eine Mahldauer ab. Die Steuereinheit 62 steuert die Mühle an. Die Kaffeebohnen werden entsprechend dem vorbestimmten Mahlgrad zu Kaffeepulver gemahlen. Kaffeepulver wird der Zubereitungseinheit 18, insbesondere einer Brüheinheit 20, zugeführt. Die Zutatenaufnahme der Brüheinheit 20 wird mit dem Kaffeepulver befüllt.

Das Verfahren umfasst einen weiteren Verfahrensschritt 88. In dem weiteren Verfahrensschritt 88 steuert die Steuereinheit 62 die Getränkepumpe 12 an. Die Getränkeflüssigkeit 14 wird mittels der Getränkepumpe 12 gefördert. Die Regeleinheit 16 regelt einen Wert der Strömungskenngröße, insbesondere des Volumenstroms, auf einen im Wesentlichen konstanten Wert. Der Kolbengrundkörper 34 des Kolbens 24 der Regeleinheit 16 wird von einem wesentlichen Teil der gepumpten Getränkeflüssigkeit 14 durchströmt. Der Kolbengrundkörper 34 des Kolbens 24 der Regeleinheit 16 wird über die Blendöffnung 32 in dem weiteren Verfahrensschritt 88 von einem wesentlichen Teil der gepumpten Getränkeflüssigkeit 14 durchströmt. Nach der Regeleinheit 16 durchströmt die Getränkeflüssigkeit 14 die Zubereitungseinheit 18.

Das Verfahren umfasst einen weiteren Verfahrensschritt 90. In dem weiteren Verfahrensschritt 90 ist eine Bereitung der Getränkevariante abgeschlossen. Das Getränk wird über die Getränkeausgabeeinheit 85 ausgegeben und in ein Getränkegefäß eingefüllt.

### Bezugszeichen

- 10: Getränkemaschinenvorrichtung
- 12: Getränkepumpe
- 14: Getränkeflüssigkeit
- 16: Regeleinheit
- 18: Zubereitungseinheit
- 20: Brüheinheit
- 22: Temperiereinheit
- 24: Kolben
- 26: Steuerfläche
- 28: Ventilelement
- 30: Blende
- 32: Blendöffnung
- 34: Kolbengrundkörper
- 36: Getränkemaschine
- 38: Zutatenspeicher
- 40: Getränkeflüssigkeitsspeicher
- 42: Getränkeflüssigkeitstank
- 44: Leitungssystem
- 46: Leitkanal
- 48: Teilkanal
- 50: Teilkanal
- 52: Teilkanal
- 54: Teilkanal
- 56: Teilkanal
- 58: Teilkanal
- 60: Sensoreinheit
- 62: Steuereinheit
- 64: Bedienelement
- 66: Gehäuse
- 68: Hauptströmungsrichtung
- 70: Dichtung
- 72: Ventilkörper
- 74: Ventilsitz
- 76: Führungsfortsatz
- 78: Hülse
- 80: Topfgehäuseelement
- 82: Deckelgehäuseelement
- 84: Federelement
- 85: Getränkeausgabeeinheit
- 86: Verfahrensschritt
- 88: Verfahrensschritt
- 90: Verfahrensschritt

## Patentansprüche

1. Getränkemaschinenvorrichtung, insbesondere Kaffeemaschinenvorrichtung, mit zumindest einer Getränkepumpe (12), vorzugsweise einer Schwingankerpumpe, welche zur Förderung einer Getränkeflüssigkeit (14) vorgesehen ist, mit zumindest einer Regeleinheit (16), welche zumindest einen Kolben (24) mit einer Steuerfläche (26) und zumindest ein fest mit dem Kolben (24) verbundenes Ventilelement (28) aufweist, welches zu einer direkten Veränderung eines Einlassquerschnitts vorgesehen ist, welche zumindest eine Blende (30) mit zumindest einer Blendöffnung (32) aufweist, die zu einer Regelung der Strömungskenngröße, insbesondere des Volumenstroms, der Getränkeflüssigkeit (14) dazu vorgesehen ist, einen Staudruck zu erzeugen, und welche dazu vorgesehen ist, zumindest eine Strömungskenngröße der Getränkeflüssigkeit (14) einzuregeln, und mit zumindest einer Zubereitungseinheit (18), welche zumindest eine Brüheinheit (20) umfasst, wobei
die zumindest eine Regeleinheit (16) fluidtechnisch vor der Brüheinheit (20) angeordnet ist, **dadurch gekennzeichnet, dass** die zumindest eine Blende (30) der zumindest einen Regeleinheit (16) einstückig mit dem zumindest einen Kolben (24) ausgebildet oder zumindest teilweise separat ausgebildet und mit dem Kolben (24) verbunden ist.

2. Getränkemaschinenvorrichtung nach Anspruch 1,
**dadurch gekennzeichnet, dass**
die zumindest eine Regeleinheit (16) zumindest teilweise einen Volumenstromregler ausbildet.

3. Getränkemaschinenvorrichtung nach Anspruch 1 oder 2,
**dadurch gekennzeichnet, dass**
die Zubereitungseinheit (18) zumindest eine Temperiereinheit (22) aufweist, wobei die zumindest eine Regeleinheit (16) fluidtechnisch zwischen der Getränkepumpe (12) und der Temperiereinheit (22) angeordnet ist.

4. Getränkemaschinenvorrichtung zumindest nach Anspruch 1 oder 2,
**dadurch gekennzeichnet, dass**
die zumindest eine Regeleinheit (16) zumindest teilweise in die Getränkepumpe (12) integriert ist.

5. Getränkemaschinenvorrichtung nach einem der vorhergehenden Ansprüche,
**dadurch gekennzeichnet, dass**
die zumindest eine Blendöffnung (32) der Blende (30) direkt in einen Kolbengrundkörper (34) des Kolbens (24) eingebracht ist.

6. Regeleinheit für die Getränkemaschinenvorrichtung (10) nach einem der vorhergehenden Ansprüche,
**gekennzeichnet durch**
zumindest einen Kolben (24) mit einer Steuerfläche (26), zumindest ein fest mit dem Kolben (24) verbundenes Ventilelement (28), welches zu einer direkten Veränderung eines Einlassquerschnitts vorgesehen ist, und zumindest eine einstückig mit dem Kolben (24) ausgebildete Blende (30) mit einer Blendöffnung (32), die zu einer Regelung des Volumenstroms dazu vorgesehen ist, einen Staudruck zu erzeugen.

7. Verfahren zu einem Betrieb der Getränkemaschinenvorrichtung (10) nach einem der Ansprüche 1 bis 5.

8. Verfahren nach Anspruch 7,
**dadurch gekennzeichnet, dass**
der Kolbengrundkörper (34) des Kolbens (24) der Regeleinheit (16) von einem wesentlichen Teil der gepumpten Getränkeflüssigkeit (14) durchströmt wird.

## Claims

1. Beverage machine device, in particular coffee machine device,
with at least one beverage pump (12), preferably an oscillating armature pump, which is configured for conveying a beverage liquid (14),
with at least one regulation unit (16) comprising at least one piston (24) that has a control surface (26), comprising at least one valve element (28) that is fixedly connected with the piston (24) and is configured for a direct modification of an inlet cross section, and comprising at least one aperture (30) with at least one aperture opening (32), which is configured to generate a back pressure for a regulation of the flow parameter, in particular of the volume flow, of the beverage liquid (14) and is configured to regulate at least one flow parameter of the beverage liquid (14), and with at least one preparation unit (18) comprising at least one brewing unit (20), wherein the at least one regulation unit (16) is arranged fluidically upstream of the brewing unit (20),
**characterised in that** the at least one aperture (30) of the at least one regulation unit (16) is implemented integrally with the at least one piston (24) or is implemented at least partially separately and is connected with the piston (24).

2. Beverage machine device according to claim 1,
**characterised in that** the at least one regulation unit (16) at least partially forms a volume flow regulator.

3. Beverage machine device according to claim 1 or 2,
**characterised in that** the preparation unit (18) comprises at least one tempering unit (22), wherein the at least one regulation unit (16) is arranged fluidically between the beverage pump (12) and the tempering unit (22).

4. Beverage machine device at least according to claim 1 or 2,
**characterised in that** the at least one regulation unit (16) is at least partially integrated in the beverage pump (12).

5. Beverage machine device according to one of the preceding claims,
**characterised in that** the at least one aperture opening (32) of the aperture (30) is directly introduced in a piston base body (34) of the piston (24).

6. Regulation unit for the beverage machine device (10) according to one of the preceding claims,
**characterised by** at least one piston (24) with a control surface (26), at least one valve element (28) that is fixedly connected with the piston (24) and is configured for a direct modification of an inlet cross section, and at least one aperture (30) with an aperture opening (32), which is configured to generate a back pressure for a regulation of the volume flow.

7. Method for operating the beverage machine device (10) according to one of claims 1 to 5.

8. Method according to claim 7,
**characterised in that** the piston base body (34) of the piston (24) of the regulation unit (16) is flowed through by a substantial portion of the pumped beverage liquid (14).

## Revendications

1. Dispositif de machine à boissons, en particulier dispositif de cafetière,
avec au moins une pompe à boissons (12), préférablement une pompe à armature oscillante, qui est destinée à transporter un liquide de boisson (14),
avec au moins une unité de régulation (16) comprenant au moins un piston (24) avec une surface de commande (26) et comprenant au moins un élément de soupape (28) qui est fixement raccordé au piston (24) et est configuré pour un changement directe d'une coupe transversale d'entrée, comprenant au moins une aperture (30) avec au moins une ouverture d'aperture (32), qui est destiné à générer une pression de refoulement pour une régulation du paramètre d'écoulement, en particulier du débit volumétrique, du liquide de boisson (14), et qui est destiné pour une régulation de l'au moins un paramètre d'écoulement du liquide de boisson (14),
et avec au moins une unité de préparation (18) comportant au moins une unité infuseur (20), l'au moins une unité de régulation (16) étant disposé fluidiquement en amont de l'unité infuseur (20),
**caractérisé en ce que** l'au moins une aperture (30) de l'au moins une unité de régulation (16) est réalisé intégralement avec l'au moins un piston (24) ou est réalisé au moins partiellement séparément et est raccordé au piston (24).

2. Dispositif de machine à boissons selon la revendication 1,
**caractérisé en ce que** l'au moins une unité de régulation (16) forme au moins partiellement un régulateur de débit volumétrique.

3. Dispositif de machine à boissons selon l'une des revendications 1 ou 2,
**caractérisé en ce que** l'unité de préparation (18) comporte au moins une unité régulatrice de température (22), l'au moins une unité de régulation (16) étant disposée fluidiquement entre la pompe à boissons (12) et l'unité régulatrice de température (22).

4. Dispositif de machine à boissons au moins selon l'une des revendications 1 ou 2,
**caractérisé en ce que** l'au moins une unité de régulation (16) est au moins partiellement intégrée dans la pompe à boissons (12).

5. Dispositif de machine à boissons au moins selon l'une des revendications précédentes,
**caractérisé en ce que** l'au moins une ouverture d'aperture (32) de l'aperture (30) est directement introduite dans un corps de base de piston (34) du piston (24).

6. Unité de régulation pour le dispositif de machine à boissons (10) selon l'une des revendications précédentes,
**caractérisé par** au moins un piston (24) avec une surface de commande (26), au moins un élément de soupape (28) qui est fixement raccordé au piston (24) et est destiné à un changement directe d'une coupe transversale d'entrée, et au moins une aperture (30) avec une ouverture d'aperture (32), qui est réalisé intégralement avec le piston (24) et qui est destiné à générer une pression de refoulement pour une régulation du débit volumétrique.

7. Procédé en fonctionnement du dispositif de machine à boissons (10) selon l'une des revendications 1 à 5.

8. Procédé selon la revendication 7,
**caractérisé en ce que** le corps de base de piston (34) du piston (24) de l'unité de régulation (16) est percolé par une portion substantielle du liquide de boisson (14) pompé.
